(19) Europäisches Patentamt
European Patent Office
Office européen des brevets

(11) EP 1 862 251 A1

(12) EUROPEAN PATENT APPLICATION
published in accordance with Art. 158(3) EPC

(43) Date of publication:
05.12.2007 Bulletin 2007/49

(51) Int Cl.:
B23K 35/363 (2006.01)    B23K 35/40 (2006.01)

(21) Application number: 06729784.6

(22) Date of filing: 23.03.2006

(86) International application number:
PCT/JP2006/305817

(87) International publication number:
WO 2006/104007 (05.10.2006 Gazette 2006/40)

(84) Designated Contracting States:
AT BE BG CH CY CZ DE DK EE ES FI FR GB GR
HU IE IS IT LI LT LU LV MC NL PL PT RO SE SI
SK TR

(30) Priority: 25.03.2005 JP 2005088695

(71) Applicants:
• Jemco Inc.
Akita-shi,
Akita 010-0065 (JP)
• MITSUBISHI MATERIALS CORPORATION
Chiyoda-ku,
Tokyo 100-8117 (JP)

(72) Inventors:
• HONDA, Kazuyoshi
kita, 0100065 (JP)
• SAITOH, Satoru
kita, 0100065 (JP)

(74) Representative: Gille Hrabal Struck Neidlein Prop Roos
Patentanwälte
Brucknerstrasse 20
40593 Düsseldorf (DE)

(54) FLUX POWDER FOR BRAZING ALUMINUM MATERIAL AND PROCESS FOR PRODUCING THE FLUX POWDER

(57) It is aimed at providing a brazing flux powder, which exhibits an excellent spreadability in case of brazing of an Mg-containing aluminum-based material, which is non-corrosive and is thus excellent in safety, which is relatively inexpensive and is thus economically excellent, and which can be used in a wide and general manner. There is provided an improvement in a flux powder containing therein $KAlF_4$, $K_2AlF_5$, and $K_2AlF_5 \cdot H_2O$, usable for brazing of an aluminum-based material having an Mg content of 0.1 to 1.0 wt%, and the improving characteristic configuration resides in that the flux powder has a composition where a K/Al molar ratio is within a range of 1.00 to 1.20 and an F/Al molar ratio is within a range of 3.80 to 4.10, and the $K_2AlF_5$ and $K_2AlF_5 \cdot H_2O$ have a sum content of 6.0 to 40.0 wt%, balance $KAlF_4$, and that part or the whole of the crystal structure of $K_2AlF_5 \cdot H_2O$ is at least one of a K-defective type, F-defective type, and K-and-F-defective type crystal structure.

Fig. 1

**Description**

TECHNICAL FIELD

The present invention relates to a flux powder suitable for brazing of an aluminum-based material containing magnesium, and a production method of the flux powder.

BACKGROUND ART

For brazing of an aluminum-based material, there has been conventionally used, as a brazing filler metal, an eutectic aluminum-silicon (Al-Si) alloy having a melting point slightly lower than that of an aluminum-based material. To satisfactorily join the brazing filler metal and an aluminum-based material to each other, it is required to remove an oxide layer formed on a surface of the aluminum-based material, so that fluoride-based fluxes have been used for removal of such oxide layers. Among them, there has been most widely used an non-corrosive flux comprising a complex (potassium fluoroaluminate) based on potassium fluoride (KF) and aluminum fluoride ($AlF_3$), because the non-corrosive flux has such various improved capabilities that: the flux can be directly coated or dispersed onto a surface of an aluminum-based material, the flux can be subjected to a continuous treatment within a nitrogen atmosphere furnace, the flux is stable in terms of a flux thin-film after brazing, it is unnecessary to remove the coated or dispersed flux powder, and the flux is provided at a decreased cost with high-quality. The $KF-AlF_3$ based flux reacts with an oxide layer at a surface of an aluminum-based material in a state that $KAlF_4$ as a main component of the flux is melted, thereby joining the active aluminum-based material to a melted brazing filler metal.

Meanwhile, it has been investigated to use aluminum-based materials containing magnesium (Mg) which is excellent in strength and corrosion resistance, in order to decrease a thickness of an aluminum member so as to decrease a usage amount of material, thereby achieving a decreased cost and decreasing the weight of the member.

However, the $KF-AlF_3$ based flux has such a defect that the flux fails to exhibit a sufficient capability for brazing of an aluminum-based material containing Mg. Concretely, in case of brazing of an aluminum-based material containing Mg in an amount exceeding 0.4 wt%, Mg and the flux react with each other and $KAlF_4$ is consumed as a main component of the flux as represented by the following formula (1) during brazing, thereby exemplarily generating and depositing $KMgF_3$ and $AlF_3$ having high melting points, respectively. The $KMgF_3$ and $AlF_3$ exemplarily raise a melting point of the flux layer, thereby considerably lowering flowability thereof upon melting. Thus, the melted flux fails to have a sufficient spreadability while $KAlF_4$ as the main component of the flux is consumed due to the reaction, removal of an oxide layer at the surface of the aluminum-based material is not sufficiently attained.

$$3Mg+3KAlF_4 \rightarrow 3KMgF_3(s)\downarrow+AlF_3(s)\downarrow+2Al\downarrow \qquad (1)$$

This has resulted in a problem that the presently used fluxes each fail to obtain a sufficient spreadability such that an oxide layer at a material surface is not removed in case of brazing of an Mg-containing aluminum-based material, unless each flux is coated in an amount of about five times as much as that in case of an aluminum-based material without containing Mg.

As means for solving the problem, there has been proposed a brazing flux (see Patent Document 1, for example) comprising: 100 wt% of potassium fluoroaluminate, or a mixed composite of potassium fluoroaluminate and aluminum fluoride, containing 60 to 50 wt% of aluminum fluoride and 40 to 50 wt% of potassium fluoride in terms of simple compound representation; and 5 to 15 wt% of aluminum ammon fluoride, relative to the whole amount of the former. The flux shown in the Patent Document 1 is described to enable brazing of an aluminum-based material containing Mg in an amount up to about 2 wt%.

There has been proposed another brazing flux (see Patent Document 2, for example) comprising cesium fluoroaluminate, or a mixed composite of cesium fluoroaluminate and aluminum fluoride, having a composition corresponding to aluminum fluoride/cesium fluoride at a molar ratio of 67/33 to 26/74 in terms of simple compound representation. The flux shown in the Patent Document 2 is usable in brazing for an aluminum-based material containing Mg in an amount of 1 wt% or less.

Patent Document 1: Unexamined Japanese Patent Application Publication No. S60(1985)-184490 (Claim 1, and description from line 15 of upper left column to line 2 of upper right column in page 3)

Patent Document 2: Unexamined Japanese Patent Application Publication No. S61(1986)-162295 (Claims)

DISCLOSURE OF THE INVENTION

Problem to be solved by the Invention

However, the flux described in the Patent Document 1 causes a large amount of harmful fumes of ammonium fluoride ($NH_4F$) in the course of brazing, thereby causing serious problems from standpoints of corrosion of apparatus, safety and health, and pollution.

Further, in the flux described in the Patent Document 2, expensive cesium is adopted as a starting material thereof, so that the flux is not economical for typically attained brazing and thus has not been put into practical use. Moreover, the cesium-containing flux contains a cesium compound therein having hygroscopicity, such that usage of the cesium-containing flux causes a problem of corrosion of a brazing equipment.

It is therefore an object of the present invention to provide: a brazing flux powder, which exhibits an excellent spreadability in case of brazing of an Mg-containing aluminum-based material, which is non-corrosive and is thus excellent in safety, which is relatively inexpensive and is thus economically excellent, and which can be used in a wide and general manner; and a production method of the brazing flux powder.

Means for solving the Problem

The invention recited in claim 1 is an improvement in a flux powder containing therein $KAlF_4$, $K_2AlF_5$, and $K_2AlF_5 \cdot H_2O$, usable for brazing of an aluminum-based material having an Mg content of 0.1 to 1.0 wt%. The improving characteristic configuration resides in that the flux powder has a composition where a K/Al molar ratio is within a range of 1.00 to 1.20 and an F/Al molar ratio is within a range of 3.80 to 4.10, and the $K_2AlF_5$ and $K_2AlF_5 \cdot H_2O$ have a sum content of 6.0 to 40.0 wt%, balance $KAlF_4$, and

that part or the whole of the crystal structure of $K_2AlF_5 \cdot H_2O$ is at least one of a K-defective type, F-defective type, and K-and-F-defective type crystal structure.

The invention recited in claim 2 is an improvement in a flux powder containing therein $KAlF_4$, $K_2AlF_5$, $K_2AlF_5 \cdot H_2O$, and $K_3AlF_6$, usable for brazing of an aluminum-based material having an Mg content of 0.1 to 1.0 wt%. The improving characteristic configuration resides in that the flux powder has a composition where a K/A1 molar ratio is within a range of 1.00 to 1.20 and an F/A1 molar ratio is within a range of 3.80 to 4.10, and the $K_2AlF_5$ and $K_2AlF_5 \cdot H_2O$ have a sum content of 6.0 to 40.0 wt%, and the $K_3AlF_6$ has a content of 5.0 wt% or less, balance $KAlF_4$, and

that part or the whole of the crystal structure of $K_2AlF_5 \cdot H_2O$ is at least one of a K-defective type, F-defective type, and K-and-F-defective type crystal structure.

In the flux powder according to claim 1 or 2, part or the whole of the crystal structure of $K_2AlF_5 \cdot H_2O$ is at least one of a K-defective type, F-defective type, and K-and-F-defective type crystal structure, so that flowability and spreadability are improved upon melting to thereby improve an ability to remove an oxide layer at a surface of an Mg-containing aluminum-based material upon brazing of the material as compared to the conventional flux powders, and the coating amount of the flux powder onto the Mg-containing aluminum-based material can be remarkably decreased as compared to those of the conventional flux powders, thereby enabling achievement of excellent brazing. Further, the flux powder of the present invention is non-corrosive and thus excellent in safety, relatively inexpensive and thus excellent in economical efficiency, and usable widely and generally.

The invention recited in claim 3 according to claim 1 or 2 resides in that the flux powder has a specific volume resistance in a range of $1 \times 10^9$ to $5 \times 10^{11}$ $\Omega \cdot cm$ when the flux powder has been dried down to a constant weight at 100°C.

In case of the invention according to claim 3, the flux powder can be proven to be controlled to prevent $K_2AlF_5 \cdot H_2O$ from sufficiently establishing a stoichiometric composition and from sufficiently growing in crystallinity, when the powder has a specific volume resistance within a range of $1 \times 10^9$ to $5 \times 10^{11}$ $\Omega \cdot cm$ after the flux powder has been dried down to a constant weight at 100°C. Note that those flux powders having specific volume resistances exceeding the above range have $K_2AlF_5 \cdot H_2O$ contained therein which has mostly established a stoichiometric composition and largely grown in crystallinity in a manner to lose a crystal structure of a K-defective type, F-defective type, or K-and-F-defective type crystal structure from $K_2AlF_5 \cdot H_2O$, thereby problematically failing to obtain an excellent spreadability in brazing of an Mg-containing aluminum-based material.

The invention recited in claim 4 according to claim 1 or 2 resides in that the maximum diffraction peak intensity which is present at 2θ between 44° and 45° and which is derived from $K_2AlF_5 \cdot H_2O$ upon X-ray diffraction analysis of the flux powder, is 12% or less of the maximum peak intensity derived from $KAlF_4$.

In case of the invention according to claim 4, the flux powder can be proven to be controlled to prevent $K_2AlF_5 \cdot H_2O$ from sufficiently establishing a stoichiometric composition and from sufficiently growing in crystallinity, when the maximum diffraction peak intensity which is present at 2θ between 44° and 45° and which is derived from $K_2AlF_5 \cdot H_2O$ upon X-ray diffraction analysis of the flux powder, is 12% or less of the maximum peak intensity derived from $KAlF_4$. Note that those flux powders having peak intensities exceeding the above range have $K_2AlF_5 \cdot H_2O$ contained therein

which has mostly established a stoichiometric composition and largely grown in crystallinity in a manner to lose a crystal structure of a K-defective type, F-defective type, or K-and-F-defective type crystal structure from $K_2AlF_5 \cdot H_2O$, thereby problematically failing to obtain an excellent spreadability in brazing of an Mg-containing aluminum-based material.

The invention recited in claim 5 according to claim 1 or 2 resides in that the melting peak height of the flux powder detected in a temperature range of 550 to 560°C upon DTA analysis (Differential Thermal Analysis, hereinafter called "DTA analysis") of the flux powder, is higher than the melting peak height detected in a temperature range higher than 560°C.

In case of the invention according to claim 5, the flux powder can be proven to be controlled to prevent $K_2AlF_5 \cdot H_2O$ from sufficiently establishing a stoichiometric composition and from sufficiently growing in crystallinity, when the melting peak height of the flux powder detected in a temperature range of 550 to 560°C upon DTA analysis of the flux powder, is higher than the melting peak height detected in a temperature range higher than 560°C. Note that those flux powders having melting peak heights lower than the melting peak height detected in a temperature range higher than 560°C, have $K_2AlF_5 \cdot H_2O$ contained therein which has mostly established a stoichiometric composition and largely grown in crystallinity in a manner to lose a crystal structure of a K-defective type, F-defective type, or K-and-F-defective type crystal structure from $K_2AlF_5 \cdot H_2O$, thereby problematically failing to obtain an excellent spreadability in brazing of an Mg-containing aluminum-based material.

The invention recited in claim 6 resides in a production method of a flux powder usable for brazing of an aluminum-based material having an Mg content of 0.1 to 1.0 wt%, characterized in that the method comprises the steps of:

adopting aluminum hydroxide, hydrofluoric acid, and potassium hydroxide, as starting compounds;
using the starting compounds at a K/Al molar ratio within a range of 1.00 to 1.20 and an F/Al molar ratio within a range of 4.00 to 4.20; and
wet reacting the starting compounds with one another at a reaction temperature of 70 to 100°C.

According to the invention of claim 6, there can be obtained a flux powder where part or the whole of the crystal structure of $K_2AlF_5 \cdot H_2O$ is at least one of a K-defective type, F-defective type, and K-and-F-defective type crystal structure, by production under the above condition.

Effect of the Invention

The flux powder of the present invention includes $K_2AlF_5 \cdot H_2O$ restrained from sufficiently establishing a stoichiometric composition and from sufficiently growing in crystallinity such that part or the whole of the crystal structure of $K_2AlF_5 \cdot H_2O$ is at least one of a K-defective type, F-defective type, and K-and-F-defective type crystal structure, so that flowability and spreadability are improved upon melting to thereby improve an ability to remove an oxide layer at a surface of an aluminum-based material having an Mg content of 0.1 to 1.0 wt% upon brazing of the material as compared to the conventional flux powders, and the coating amount of the flux powder onto the Mg-containing aluminum-based material can be remarkably decreased as compared to those of the conventional flux powders, thereby enabling achievement of excellent brazing. Further, the flux powder of the present invention is non-corrosive and thus excellent in safety, relatively inexpensive and thus excellent in economical efficiency, and usable widely and generally.

Further, the flux powder production method of the present invention comprises the steps of: adopting aluminum hydroxide, hydrofluoric acid, and potassium hydroxide, as starting compounds; adjusting the starting compounds to a K/Al molar ratio within a range of 1.00 to 1.20 and an F/Al molar ratio within a range of 4.00 to 4.20; and wet reacting the starting compounds with one another at a reaction temperature of 70 to 100°C; thereby allowing for obtainment of a flux powder where part or the whole of the crystal structure of $K_2AlF_5 \cdot H_2O$ is at least one of a K-defective type, F-defective type, and K-and-F-defective type crystal structure.

BRIEF DESCRIPTION OF THE DRAWINGS

FIG. 1 is a flowchart of a production method of a flux powder of the present invention.
FIG. 2 is a graph of measurement results of thermogravimetry and differential thermal analysis in sample No. 13.
FIG. 3 is a graph of measurement results of thermogravimetry and differential thermal analysis in sample No. 20.
FIG. 4 is a graph illustrating a relationship between a reaction temperature and spreadability, in samples No. 1 to No. 32.
FIG. 5 is a graph illustrating a relationship between a K/Al molar ratio and an F/Al molar ratio, in samples No. 1 to No. 32.
FIG. 6 is a graph illustrating a relationship between a K/Al molar ratio and spreadability, in samples No. 1 to No. 32.
FIG. 7 is a graph illustrating a relationship between a heating loss and a relative intensity, in samples No. 1 to No. 32.

FIG. 8 is a graph illustrating a relationship between a K/Al molar ratio and a specific volume resistance, in samples No. 1 to No. 32.

FIG. 9 is a graph illustrating a relationship between a specific volume resistance and spreadability, in samples No. 1 to No. 32.

FIG. 10 is a graph illustrating a relationship between an F/Al molar ratio and spreadability, in samples No. 1 to No. 32.

FIG. 11 is a graph illustrating a relationship between an F/Al molar ratio and a specific volume resistance, in samples No. 1 to No. 32.

BEST MODE FOR CARRYING OUT THE INVENTION

There will be explained a best mode for carrying out the present invention.

When $K_2AlF_5$, $K_3AlF_6$, and the like are present in a KF-AlF$_3$ based flux powder in addition to KAlF$_4$, reactions are caused in an Mg-containing aluminum-based material as represented by the following formula (2) and formula (3):

$$3Mg+2KAlF_4+K_2AlF_5\rightarrow 3KMgF_3(s)\downarrow+KAlF_4+2Al\downarrow \qquad (2)$$

$$3Mg+2KAlF_4+K_3AlF_6\rightarrow 3KMgF_3(s)\downarrow+K_2AlF_5+2Al\downarrow \qquad (3)$$

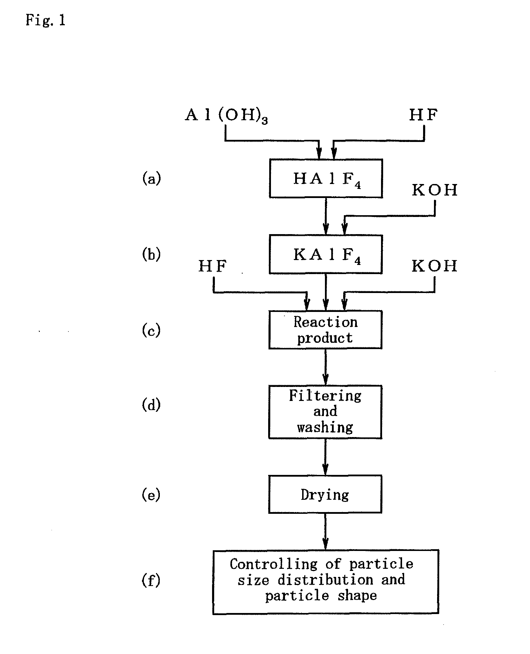

Such reactions restrict consumption of KAlF$_4$, thereby enabling prevention of deposition of AlF$_3$ having a higher melting point. However, KF-AlF$_3$ based flux powders, which have been conventionally used, are produced by a wet reaction shown in FIG. 1(a) through FIG. 1(c), as represented by the following formula (4) through formula (6).

$$Al(OH)_3+4HF\rightarrow HAlF_4+3H_2O \qquad (4)$$

$$HAlF_4+KOH\rightarrow KAlF_4\downarrow \qquad (5)$$

$$HAlF_4+HF+2KOH\rightarrow K_2AlF_5\cdot H_2O\downarrow+H_2O \qquad (6)$$

The obtained reaction products are passed through a filtering and washing step, followed by a step for drying a flux powder, and a further step for controlling a particle size distribution and particle shapes of the powder, so as to be brought into a commercial product, as shown in FIG. 1(d) through FIG. 1(f), respectively.

In turn, present in the obtained flux powder are crystal particles each in a form of $K_2AlF_5\cdot H_2O$, due to the wet reaction represented by the formula (6). The $K_2AlF_5\cdot H_2O$ containing crystallization water generates steam during a brazing process, thereby increasing an oxide layer at a surface of an aluminum-based material. This lowers flowability of a flux.

The present inventors have promoted development of a flux capable of conducting brazing of an Mg-containing aluminum-based material in a manner that flowability of the flux upon melting is improved while restricting a reaction of the flux with Mg at the surface of the Mg-containing aluminum-based material in brazing of the Mg-containing aluminum-based material, and have found that a flux powder is obtained which is improved in spreadability upon melting at a lower melting temperature, by using starting compounds at ratios where a K/Al molar ratio is within a range of 1.00 to 1.20 and an F/Al molar ratio is within a range of 4.00 to 4.20 and by conducting a wet reaction at a reaction temperature between 70 and 100°C in order to control compositions of reaction products to be obtained by the production method shown in FIG. 1(a) through FIG. 1(c) and the wet reaction formula according to the formula (4) through formula (6), thereby causing that $K_2AlF_5\cdot H_2O$ acting as a factor for decreasing flowability of the flux is prevented from sufficiently establishing a stoichiometric composition and from sufficiently growing in crystallinity such that $K_2AlF_5\cdot H_2O$ is provided as particles each having an insufficient crystallinity and crystal defects. It has been proven that the flux powder having such a composition not only has increased flowability and spreadability upon melting and thus has an improved ability to remove an oxide layer at a material surface, but also restricts a reaction of the flux with Mg at a surface of an aluminum-based material, thereby allowing for obtainment of an excellent brazing ability.

The flux powder of the present invention is one to be preferably used for brazing of an aluminum-based material having an Mg content of 0.1 to 1.0 wt%, and particularly for an aluminum-based material having an Mg content exceeding 0.5 wt%.

The first flux powder of the present invention contains therein KAlF$_4$, $K_2AlF_5$, and $K_2AlF_5\cdot H_2O$, characterized in that the flux powder has a composition where a K/Al molar ratio is within a range of 1.00 to 1.20 and an F/Al molar ratio is within a range of 3.80 to 4.10, and the $K_2AlF_5$ and $K_2AlF_5\cdot H_2O$ have a sum content of 6.0 to 40.0 wt%, balance KAlF$_4$, and that part or the whole of the crystal structure of $K_2AlF_5\cdot H_2O$ is at least one of a K-defective type, F-defective type, and K-and-F-defective type crystal structure. Since part or the whole of the crystal structure of $K_2AlF_5\cdot H_2O$ is at least one of a K-defective type, F-defective type, and K-and-F-defective type crystal structure, flowability and spreadability are improved upon melting to thereby improve an ability to remove an oxide layer at a surface of an Mg-containing aluminum-based material upon brazing of the material as compared to the conventional flux powders, and the coating amount of the flux powder onto the Mg-containing aluminum-based material can be remarkably decreased as compared to those of the conventional flux powders, thereby enabling achievement of excellent brazing. Further, the flux powder of the present invention is non-corrosive and thus excellent in safety, relatively inexpensive and thus excellent in economical efficiency, and usable widely and generally. The flux powder has a composition where a K/A1 molar ratio is within a range of 1.00 to 1.20 and an F/A1 molar ratio is within a range of 3.80 to 4.10, and particularly preferably a K/Al molar ratio is within a range of 1.02 to 1.15 and an F/Al molar ratio is within a range of 3.90 to 4.08. The reason why the $K_2AlF_5$ and $K_2AlF_5 \cdot H_2O$ included in the flux powder are made to have a sum content in a range of 6.0 to 40.0 wt% is that, contents less than the lower limit value fail to form defective type crystal structures in that of $K_2AlF_5 \cdot H_2O$, so that the flux powder fails to exhibit flowability and spreadability, thereby failing to conduct excellent brazing for an Mg-containing aluminum-based material. Further, contents exceeding the upper limit value rather lower flowability and spreadability upon melting the flux powder to thereby degrade brazing ability, while increasing an $H_2O$ component to be caught during a brazing process to thereby deteriorate brazing ability and cause corrosion of a brazing equipment, which is undesirable for practical use. Among the above, the sum content of $K_2AlF_5$ and $K_2AlF_5 \cdot H_2O$ is particularly preferably 10 to 30 wt%.

Further, the second flux powder of the present invention contains therein $KAlF_4$, $K_2AlF_5$, $K_2AlF_5 \cdot H_2O$, and $K_3AlF_6$, characterized in that the flux powder has a composition where a K/Al molar ratio is within a range of 1.00 to 1.20 and an F/Al molar ratio is within a range of 3.80 to 4.10, and the $K_2AlF_5$ and $K_2AlF_5 \cdot H_2O$ have a sum content of 6.0 to 40.0 wt%, and the $K_3AlF_6$ has a content of 5.0 wt% or less, balance $KAlF_4$, and that part or the whole of the crystal structure of $K_2AlF_5 \cdot H_2O$ is at least one of a K-defective type, F-defective type, and K-and-F-defective type crystal structure. The K/Al molar ratio and an F/Al molar ratio are decreased as compared to the conventional flux powder, so that part or the whole of the crystal structure of $K_2AlF_5 \cdot H_2O$ is allowed to be at least one of a K-defective type, F-defective type, and K-and-F-defective type crystal structure. Particularly desirably, the flux powder has a composition where a K/Al molar ratio is within a range of 1.02 to 1.15 and an F/Al molar ratio is within a range of 3.90 to 4.08. Compositions made at the molar ratios within the above ranges lead to extremely less amounts of generation of $K_3AlF_6$ such that a content of $K_3AlF_6$ is 5. 0 wt% or less, and characteristic peaks (20: 21.0°/29.9°) of $K_3AlF_6$ upon X-ray diffraction analysis are not recognized. The content of the $K_3AlF_6$ is preferably 4.0 wt% or less, and particularly preferably 3.0 wt% or less. The reason why the sum content of $K_2AlF_5$ and $K_2AlF_5 \cdot H_2O$ contained in the flux powder is made within a range of 6.0 to 40.0 wt%, is that, contents less than the lower limit value fail to form at least one of a K-defective type, F-defective type, and K-and-F-defective type crystal structure in that of $K_2AlF_5 \cdot H_2O$, so that the flux powder fails to exhibit flowability and spreadability, thereby failing to conduct excellent brazing for an Mg-containing aluminum-based material. Further, contents exceeding the upper limit value rather lower flowability and spreadability upon melting the flux powder to thereby degrade brazing ability, while increasing an $H_2O$ component to be caught during a brazing process to thereby deteriorate brazing ability and cause corrosion of a brazing equipment, which is undesirable for practical use. Among the above, the sum content of $K_2AlF_5$ and $K_2AlF_5 \cdot H_2O$ is particularly preferably 10 to 30 wt%.

The flux powder of the present invention can be proven to be controlled to prevent $K_2AlF_5 \cdot H_2O$ from sufficiently establishing a stoichiometric composition and from sufficiently growing in crystallinity, when the powder has a specific volume resistance (electrical resistance) of $1 \times 10^9$ to $5 \times 10^{11}$ $\Omega \cdot$cm after the flux powder has been dried down to a constant weight at 100°C. Note that, when $K_2AlF_5 \cdot H_2O$ contained in a flux powder has sufficiently established a stoichiometric composition and sufficiently grown in crystallinity such as in a case of the conventional flux powder, the specific volume resistance has a higher value of $1 \times 10^{12}$ to $5 \times 10^{13}$ $\Omega \cdot$cm. Specific volume resistances less than the above-described lower limit value lead to insufficient electric charge such that the powder fails to attach to a surface to be coated, thereby complicating electrostatic coating. The flux powder of the present invention is proven to have been controlled to cause $K_2AlF_5 \cdot H_2O$ to be prevented from sufficiently establishing a stoichiometric composition and from sufficiently growing in crystallinity, when the maximum diffraction peak intensity which is present at $2\theta$ between 44° and 45° and which is derived from $K_2AlF_5 \cdot H_2O$ upon X-ray diffraction analysis of the flux powder, is made 12% or less of the maximum peak intensity derived from $KAlF_4$. The maximum diffraction peak intensity of the former is particularly preferably 3 to 9% of the maximum peak intensity derived from $KAlF_4$. Alternatively, the flux powder of the present invention is proven to have been controlled to cause $K_2AlF_5 \cdot H_2O$ to be prevented from sufficiently establishing a stoichiometric composition and from sufficiently growing in crystallinity, when the melting peak height of the flux powder detected in a temperature range of 550 to 560°C upon DTA analysis of the flux powder, is made higher than the melting peak height detected in a temperature range higher than 560°C.

In this way, according to the flux powder of the present invention, brazing of an aluminum-based material having an Mg content of 0.1 to 1.0 wt%, which brazing has been conventionally difficult and narrowly implemented by coating of a large amount of flux, can be implemented at a coating amount decreased to that for an aluminum-based material without containing Mg, while enabling achievement of an excellent brazing ability.

Note that, in case that the flux powder of the present invention is adopted in an electrostatic coating method, there can be obtained a sufficient coating amount for brazing, by adjusting the granularity of the flux powder such that it includes 40 wt% or less of larger particles having particle diameters of 20μm or larger, and 20 to 40 wt% of smaller particles having particle diameters of 10 μm or less. Among them, those flux powders are particularly preferable, which are each adjusted to include 30 wt% or less of larger particles having particle diameters of 20 μm or larger, and 24 to 36 wt% of smaller particles having particle diameters of 10 μm or less. Contents of smaller particles having particle diameters of 10 μm or less exceeding the upper limit value, lead to lowered flowability of flux powders to thereby cause sticking and clogging in a nozzle and pipings in electrostatic coating, thereby leading to powders undesirable for dry coating.

The production method of the present invention is that of a flux powder usable for brazing of an aluminum-based material having a magnesium content of 0.1 to 1.0 wt%, characterized in that the method comprises the steps of:

adopting aluminum hydroxide, hydrofluoric acid, and potassium hydroxide, as starting compounds;
using the starting compounds at a K/Al molar ratio within a range of 1.00 to 1.20 and an F/Al molar ratio within a range of 4.00 to 4.20; and
wet reacting the starting compounds with one another at a reaction temperature of 70 to 100°C.

Production under the above condition enables obtainment of a flux powder where part or the whole of the crystal structure of $K_2AlF_5 \cdot H_2O$ is at least one of a K-defective type, F-defective type, and K-and-F-defective type crystal structure. The flux powder production method of the present invention is conducted through steps shown in FIG. 1(a) through FIG. 1 (c), and the obtained reaction products are passed through a filtering and washing step, followed by a step for drying a flux powder, and a further step for controlling a particle size distribution and particle shapes of the powder, so as to be brought into a commercial product, as shown in FIG. 1(d) through FIG. 1(f), respectively.

Using the starting compounds at F/Al molar ratios less than 4.00, part of aluminum hydroxide is left as a compound having a hydroxyl group during progress of the reaction represented by the formula (4), without being dissolved as fluoroaluminic acid ($HAlF_4$). The thus left compound having a hydroxyl group is not subjected to removal of the hydroxyl group even by the subsequent reactions such that the hydroxyl group is present in the obtained flux powder, thereby deteriorating brazing ability and spreadability due to the thus left hydroxyl group. When the starting compounds are used at F/Al molar ratios exceeding 4.20 or at K/Al molar ratios exceeding 1.20, there is not obtained a flux powder where part or the whole of the crystal structure of $K_2AlF_5 \cdot H_2O$ is at least one of a K-defective type, F-defective type, and K-and-F-defective type crystal structure, and obtained flux powders are unsuitable for brazing of Mg-containing aluminum-based materials. The starting compounds are particularly desirably used at a K/Al molar ratio within a range of 1.02 to 1.15 and an F/Al molar ratio within a range of 4.05 to 4.15. The reason why the reaction temperature is made 70 to 100°C is that, reaction temperatures lower than 70°C lead to sum contents of $K_2AlF_5$ and $K_2AlF_5 \cdot H_2O$ exceeding 40.0 wt%, and reaction temperatures higher than 100°C lead to sum contents of $K_2AlF_5$ and $K_2AlF_5 \cdot H_2O$ less than 6.0 wt%. The reaction temperature is particularly preferably 75 to 95°C. Note that, strengthening the step of FIG. 1(e) for drying the flux powder, enables to remove crystallization water from $K_2AlF_5 \cdot H_2O$ in the reaction products obtained in FIG. 1(a) through FIG. 1(c), thereby turning it into $K_2AlF_5$. This enables to further enhance flowability and spreadability of the flux powder upon melting thereof, and to decrease catching of water into a brazing process, thereby improving brazing ability.

Examples

Examples of the present invention will be described in detail, together with Comparative Examples.

<Example and Comparative Example>

Firstly, aluminum hydroxide, hydrofluoric acid, and potassium hydroxide were adopted as starting compounds; the starting compounds were used at loading K/Al molar ratios and loading F/Al molar ratios listed in the following Table 1 and Table 2, and subjected to wet reaction at reaction temperatures listed in the Table 1 and Table 2, thereby producing flux powder samples No. 1 through No. 32 having composition ratios listed in the Table 1 and Table 2, respectively. Among the produced flux powder samples, the samples No. 12 through No. 24 correspond to flux powders of the present invention, and flux powders of samples No. 1 through No. 11, and samples No. 25 through No. 32 are outside of the scope of the present invention. Further, there was also obtained a weight decrease after heating at 500°C for 15 minutes and due to departure of crystallization water from $K_2AlF_5 \cdot H_2O$ in each produced flux powder sample (hereinafter, a weight decrease after heating at 500°C for 15 minutes will be called "heating loss"). The obtained results are listed in Table 1 and Table 2, respectively.

Note that the measuring method of a heating loss of each sample is as follows.

Firstly, there is measured a tare weight of a platinum dish, which is defined to be "A". Next, 10g of a flux powder specimen is precisely weighed onto the platinum dish. The weight of the platinum dish and 10g of the flux powder specimen is defined to be "B" at this time. Subsequently, the surface of the platinum dish having the specimen thereon is covered by an aluminum foil, and the surface of the aluminum foil is formed with holes of about 2 mm size at 20 locations, respectively. Next, the platinum dish is introduced into an electrical muffle furnace, and the interior of the furnace is heated to $500\pm5°C$, followed by holding for about 15 minutes. After heating, the platinum dish together with the specimen is taken out of the electrical muffle furnace, held in a desiccator, and left to be cooled to a room temperature. Subsequently, the cooled platinum dish together with the specimen is weighed. The thus obtained weight is defined to be "C". The thus measured weight values are used in the following equation, to calculate a heating loss of the flux powder specimen.

$$\texttt{Heating loss [wt\%]=(B-C)}\times\texttt{100/(B-A)}$$

Since the thus obtained heating loss is caused by a loss of crystallization water of $K_2AlF_5 \cdot H_2O$ in the flux powder, it is possible to calculate a $K_2AlF_5 \cdot H_2O$ content by the following equation.

$$\texttt{K}_2\texttt{AlF}_5 \cdot \texttt{H}_2\texttt{O content [wt\%]=heating loss}$$

$$\texttt{[wt\%]}\times\texttt{218.2/18.0}$$

In the above equation, 218.2 represents a molecular weight of $K_2AlF_5 \cdot H_2O$, and 18.0 represents a molecular weight of $H_2O$.

[Table 1]

| No. | Molar ratio of loaded material | | Reaction temp. | Ratio of element in flux [wt%] | | | Heating loss | Flux molar ratio | | $K_2AlF_5 \cdot H_2O$ | $KAlF_4$ | $K_2AlF_5$ | $K_3AlF_6$ |
|---|---|---|---|---|---|---|---|---|---|---|---|---|---|
| | K/Al | F/Al | [°C] | Al | F | K | [wt%] | K/Al | F/Al | [mol%] | [mol%] | [mol%] | [mol%] |
| 1 | 1.24 | 4.24 | 80 | 16.55 | 48.63 | 31.81 | 2.99 | 1.33 | 4.17 | 36.2 | 57.8 | 5.0 | 1.0 |
| 2 | 1.24 | 4.24 | 82 | 16.59 | 48.88 | 31.68 | 2.81 | 1.32 | 4.19 | 34.1 | 58.9 | 6.0 | 1.0 |
| 3 | 1.24 | 4.24 | 83 | 16.97 | 49.00 | 31.47 | 2.55 | 1.28 | 4.10 | 30.9 | 63.1 | 5.0 | 1.0 |
| 4 | 1.24 | 4.24 | 83 | 16.95 | 49.16 | 31.48 | 2.39 | 1.28 | 4.12 | 29.0 | 66.0 | 0.0 | 5.0 |
| 5 | 1.24 | 4.24 | 80 | 17.26 | 49.38 | 31.07 | 2.24 | 1.24 | 4.06 | 27.2 | 67.8 | 4.0 | 1.0 |
| 6 | 1.24 | 4.24 | 84 | 17.04 | 50.01 | 31.81 | 1.12 | 1.29 | 4.17 | 13.6 | 65.4 | 17.0 | 4.0 |
| 7 | 1.24 | 4.24 | 79 | 16.98 | 49.54 | 32.35 | 1.11 | 1.32 | 4.15 | 13.5 | 62.5 | 19.0 | 5.0 |
| 8 | 1.24 | 4.24 | 80 | 17.01 | 50.15 | 30.30 | 2.49 | 1.23 | 4.19 | 30.2 | 68.8 | 1.0 | 0.0 |
| 9 | 1.24 | 4.24 | 82 | 16.69 | 50.07 | 30.39 | 2.81 | 1.26 | 4.26 | 34.1 | 64.9 | 1.0 | 0.0 |
| 10 | 1.24 | 4.24 | 82 | 16.92 | 50.10 | 30.56 | 2.37 | 1.25 | 4.21 | 28.7 | 67.3 | 3.0 | 1.0 |
| 11 | 1.24 | 4.24 | 80 | 17.08 | 49.36 | 31.06 | 2.45 | 1.26 | 4.11 | 29.7 | 69.3 | 0.0 | 1.0 |
| 12 | 1.15 | 4.18 | 78 | 18.42 | 50.47 | 29.39 | 1.72 | 1.10 | 3.89 | 20.9 | 79.1 | 0.0 | 0.0 |
| 13 | 1.06 | 4.08 | 82 | 17.79 | 50.72 | 29.52 | 1.97 | 1.15 | 4.05 | 23.9 | 76.1 | 0.0 | 0.0 |
| 14 | 1.06 | 4.08 | 83 | 17.74 | 50.61 | 30.12 | 1.46 | 1.17 | 4.05 | 17.7 | 78.3 | 2.0 | 2.0 |
| 15 | 1.06 | 4.08 | 82 | 18.12 | 50.47 | 29.73 | 1.65 | 1.13 | 3.96 | 20.0 | 80.0 | 0.0 | 0.0 |
| 16 | 1.06 | 4.08 | 84 | 18.87 | 51.63 | 28.56 | 0.94 | 1.04 | 3.89 | 11.4 | 88.6 | 0.0 | 0.0 |

[Table 2]

| No. | Molar ratio of loaded material | | Reaction temp. | Ratio of element in flux [wt%] | | | Heating loss | Flux molar ratio | | $K_2AlF_5 \cdot H_2O$ | $KALF_4$ | $K_2AlF_5$ | $K_3AlF_6$ |
|---|---|---|---|---|---|---|---|---|---|---|---|---|---|
| | K/Al | F/Al | [°C] | Al | F | K | [wt%] | K/Al | F/Al | [mol%] | [mol%] | [mol%] | [mol%] |
| 17 | 1.06 | 4.08 | 81 | 18.63 | 51.59 | 29.05 | 0.72 | 1.08 | 3.93 | 8.7 | 89.3 | 1.0 | 1.0 |
| 18 | 1.06 | 4.08 | 80 | 18.51 | 51.86 | 28.77 | 0.85 | 1.07 | 3.98 | 10.3 | 89.7 | 0.0 | 0.0 |
| 19 | 1.06 | 4.08 | 80 | 18.40 | 51.99 | 28.76 | 0.84 | 1.08 | 4.01 | 10.2 | 88.8 | 1.0 | 0.0 |
| 20 | 1.06 | 4.08 | 79 | 18.49 | 51.82 | 28.86 | 0.81 | 1.08 | 3.98 | 9.8 | 89.2 | 1.0 | 0.0 |
| 21 | 1.06 | 4.08 | 78 | 18.51 | 51.86 | 28.77 | 0.85 | 1.07 | 3.98 | 10.3 | 89.7 | 0.0 | 0.0 |
| 22 | 1.06 | 4.08 | 77 | 17.82 | 51.19 | 29.23 | 1.74 | 1.13 | 4.08 | 21.1 | 78.9 | 0.0 | 0.0 |
| 23 | 1.06 | 4.08 | 90 | 18.23 | 51.20 | 29.49 | 1.08 | 1.12 | 3.99 | 13.1 | 79.9 | 4.0 | 3.0 |
| 24 | 1.06 | 4.08 | 95 | 18.37 | 50.62 | 29.10 | 1.69 | 1.09 | 3.92 | 20.5 | 79.5 | 0.0 | 0.0 |
| 25 | 1.06 | 4.08 | 65 | 16.01 | 49.18 | 31.77 | 3.19 | 1.37 | 4.36 | 38.7 | 54.3 | 4.0 | 3.0 |
| 26 | 1.24 | 4.24 | 90 | 16.70 | 49.87 | 31.76 | 1.69 | 1.31 | 4.25 | 19.9 | 61.1 | 17.0 | 2.0 |
| 27 | 1.13 | 4.14 | 90 | 17.49 | 51.27 | 29.79 | 0.87 | 1.18 | 4.17 | 10.5 | 75.5 | 14.0 | 0.0 |
| 28 | 1.13 | 4.14 | 65 | 15.46 | 49.52 | 31.76 | 3.38 | 1.42 | 4.55 | 41.0 | 49.0 | 7.0 | 3.0 |
| 29 | 2.00 | 5.00 | 35 | 12.97 | 48.58 | 36.58 | 1.45 | 1.95 | 5.32 | 17.6 | 19.4 | 33.0 | 30.0 |
| 30 | 1.50 | 4.00 | 35 | 13.27 | 49.92 | 34.95 | 2.46 | 1.82 | 5.35 | 29.8 | 24.2 | 26.0 | 20.0 |
| 31 | 1.24 | 4.24 | 35 | 13.26 | 46.39 | 35.39 | 3.80 | 1.84 | 4.97 | 46.1 | 9.9 | 29.0 | 15.0 |
| 32 | 1.24 | 4.24 | 90 | 16.95 | 50.60 | 31.61 | 0.85 | 1.29 | 4.24 | 10.2 | 71.8 | 12.0 | 6.0 |

EP 1 862 251 A1

The produced samples were dried down to constant weights at 100°C, respectively, and specific volume resistances (electrical resistances) of the dried samples were obtained. When a specific volume resistance (electrical resistance) of a flux powder is within a range of $1\times10^9$ to $5\times10^{11}$ $\Omega\cdot$cm, this means that $K_2AlF_5\cdot H_2O$ in the powder has neither sufficiently established a stoichiometric composition nor has sufficiently grown in crystallinity. In turn, specific volume resistances exceeding the range mean that $K_2AlF_5\cdot H_2O$ in the powder has sufficiently established a stoichiometric composition and sufficiently grown in crystallinity.

Further, each sample was subjected to X-ray diffraction analysis, to obtain a peak intensity derived from $K_2AlF_5\cdot H_2O$ at 44.5°, as a relative intensity where a peak intensity derived from $KAlF_4$ at 28.9° is set to be 100. When a relative intensity of a flux powder is 12% or less, this means that $K_2AlF_5\cdot H_2O$ in the powder has neither sufficiently established a stoichiometric composition nor has sufficiently grown in crystallinity. In turn, relative intensities exceeding the range mean that $K_2AlF_5\cdot H_2O$ in the powder has sufficiently established a stoichiometric composition and sufficiently grown in crystallinity.

Further, there was conducted a spreadability test for each sample. Firstly, there was prepared an aluminum-based material "A" having an Mg content of 0.8 wt% for each sample. Next, 2 mg of each sample was coated onto the associated material "A", and housed in an ambient furnace kept at 600°C, followed by holding for about 6 minutes. After heating, the material was taken out of the ambient furnace, followed by measurement of a spreadability of the sample melted on the material surface. Measurement results are shown in Table 3.

[Table 3]

| No. | Specific volume resistance [$\Omega\cdot$cm] | Relative intensity [%] | Spreadability [mm] Material A | No. | Specific volume resistance [$\Omega\cdot$cm] | Relative intensity [%] | Spreadability [mm] Material A |
|---|---|---|---|---|---|---|---|
| 1 | $2\times10^{13}$ | 32 | 15.4 | 17 | $2\times10^{10}$ | 10 | 20.9 |
| 2 | $2\times10^{13}$ | 31 | 16.3 | 18 | $8\times10^{10}$ | 10 | 21.6 |
| 3 | $2\times10^{13}$ | 22 | 15.6 | 19 | $1\times10^{11}$ | 11 | 21.0 |
| 4 | $2\times10^{13}$ | 22 | 17.1 | 20 | $9\times10^{10}$ | 7 | 20.9 |
| 5 | $2\times10^{13}$ | 24 | 17.2 | 21 | $7\times10^{10}$ | 10 | 21.7 |
| 6 | $2\times10^{13}$ | 12 | 15.7 | 22 | $1\times10^{11}$ | 12 | 20.3 |
| 7 | $2\times10^{13}$ | 16 | 16.7 | 23 | $2\times10^{11}$ | – | 20.5 |
| 8 | $3\times10^{12}$ | 22 | 18.5 | 24 | $5\times10^{11}$ | – | 20.1 |
| 9 | $2\times10^{13}$ | 23 | 19.2 | 25 | $2\times10^{13}$ | 8 | 14.2 |
| 10 | $1\times10^{13}$ | 24 | 18.3 | 26 | $2\times10^{13}$ | 11 | 15.0 |
| 11 | $1\times10^{13}$ | 24 | 18.5 | 27 | $1\times10^{13}$ | 7 | 16.8 |
| 12 | $2\times10^{10}$ | 9 | 20.3 | 28 | $1\times10^{13}$ | 55 | 11.7 |
| 13 | $2\times10^{11}$ | 5 | 21.2 | 29 | $2\times10^{12}$ | – | 8.4 |
| 14 | $2\times10^{11}$ | 7 | 20.5 | 30 | $6\times10^{12}$ | – | 8.5 |
| 15 | $2\times10^{10}$ | 7 | 21.0 | 31 | $2\times10^{13}$ | 27 | 12.1 |
| 16 | $2\times10^{10}$ | 9 | 20.8 | 32 | $1\times10^{13}$ | 9 | 12.5 |

As apparent from Table 3, the flux powders of samples No. 1 through No. 11, No. 25 through No. 32 had specific volume resistances outside the range of $1\times10^9$ to $5\times10^{11}$ $\Omega\cdot$cm, and the flux powders of samples No. 1 through No. 5, No. 7 through No. 11, No. 28, and No. 31 had relative intensities outside the relative intensity range of 12% or less. The samples No. 1 through No. 11, No. 25 through No. 32, which did not meet both the specific volume resistance range and the relative intensity range, each exhibited a spreadability less than 20 mm. Contrary, the flux powders of samples No. 12 through No. 24, which were within the ranges of both the specific volume resistance and relative intensity, each exhibited a spreadability exceeding 20 mm, thereby obtaining an excellent spreadability.

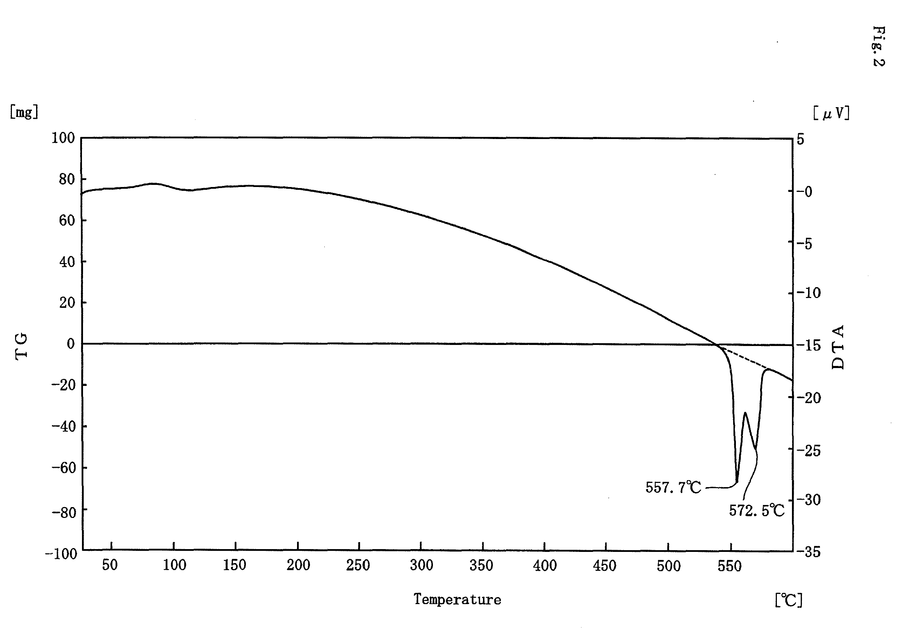

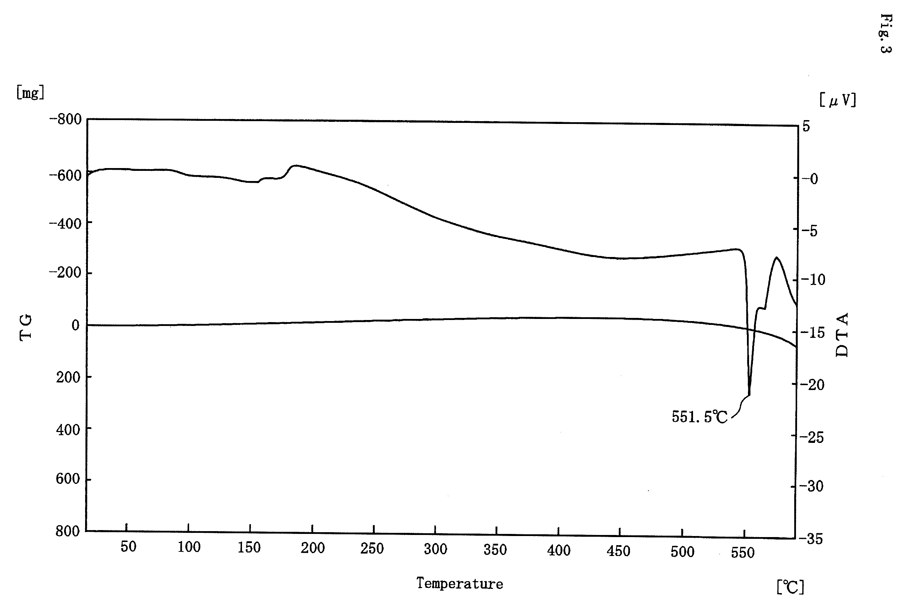

For flux powders of samples No. 13 and No. 20, there was conducted thermogravimetry/differential thermal analysis (TG-DTA). In terms of a DTA curve, when a melting peak height detected within a temperature range of 550 to 560°C is higher than a melting peak height detected in a temperature range exceeding 560°C, this means that $K_2AlF_5\cdot H_2O$ in the powder has neither sufficiently established a stoichiometric composition nor has sufficiently grown in crystallinity. In turn, when a melting peak height detected within a temperature range of 550 to 560°C is lower than a melting peak height detected in a temperature range exceeding 560°C, or when no melting peak heights are detected within a temperature range of 550 to 560°C, this means that $K_2AlF_5\cdot H_2O$ in the powder has sufficiently established a stoichiometric composition and sufficiently grown in crystallinity. Measurement results are shown in FIG. 2 and FIG. 3.

As apparent from FIG. 2, detected in a DTA curve of the sample No. 13 were a melting peak in a range of 550 to 560°C and another melting peak near 570°C, and the peak height detected in the temperature range of 550 to 560°C was higher than the peak height detected near 570°C. Further, as apparent from FIG. 3, detected in a DTA curve of the sample No. 20 were a melting peak in a range of 550 to 560°C and another shoulder-like peak in the vicinity exceeding 560°C, and the peak height detected in the temperature range of 550 to 560°C was higher than the peak height detected in the vicinity exceeding 560°C.

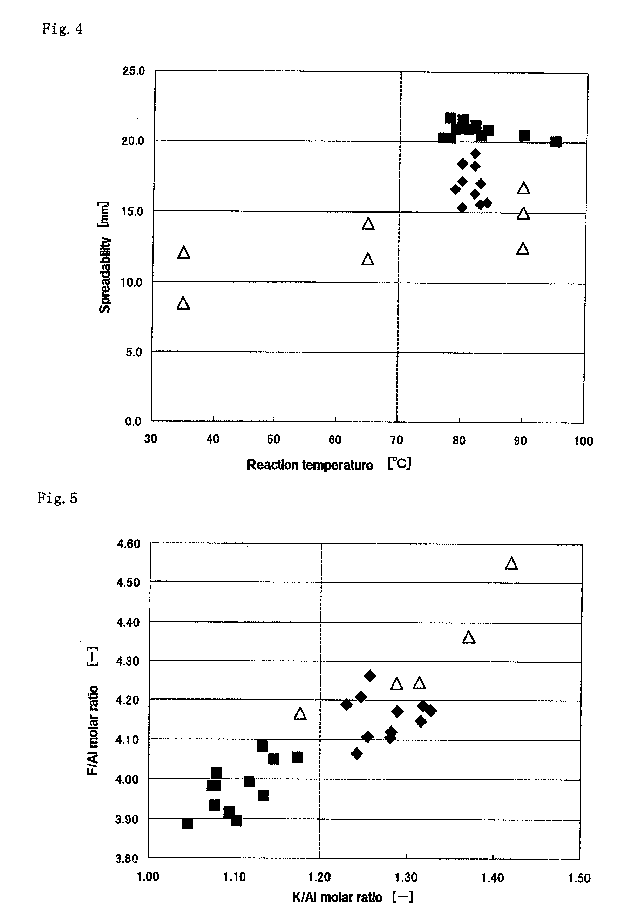

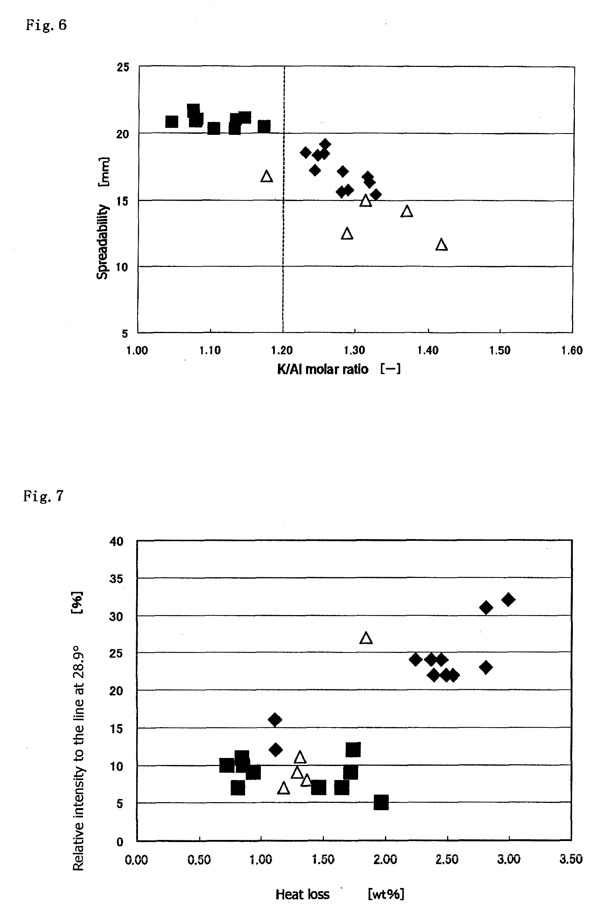

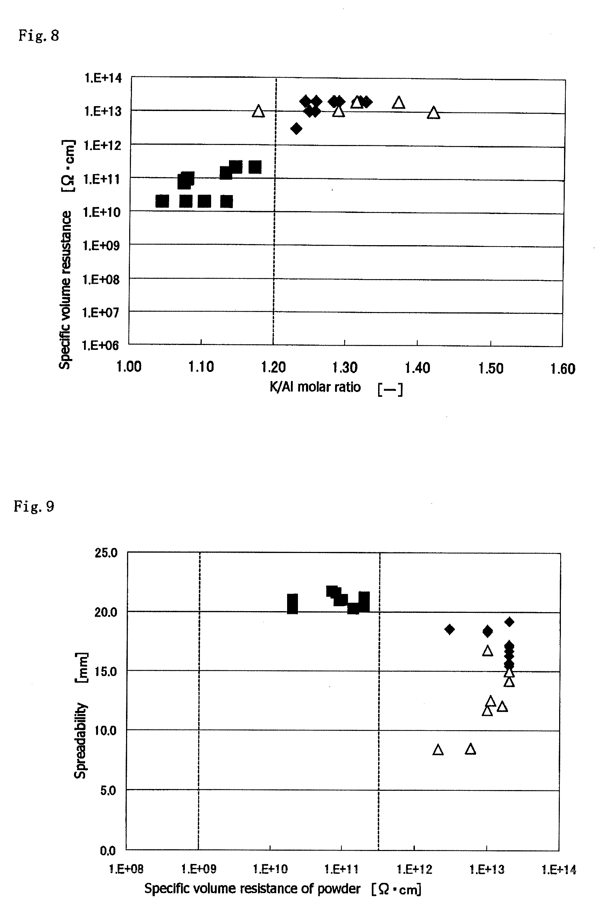

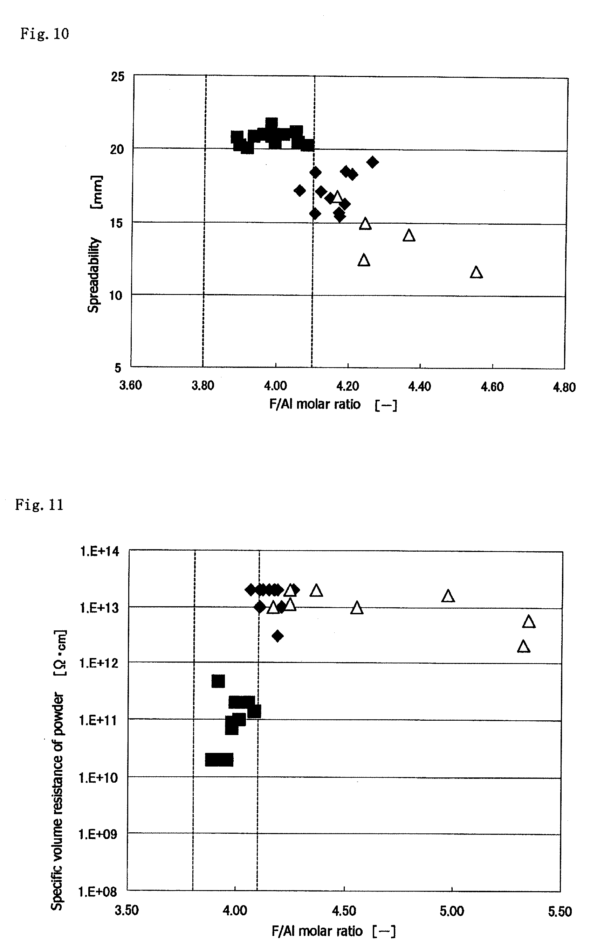

FIG. 4 shows a relationship between a reaction temperature and spreadability; FIG. 5 shows a relationship between a K/Al molar ratio and an F/Al molar ratio; FIG. 6 shows a relationship between a K/Al molar ratio and spreadability; FIG. 7 shows a relationship between a heating loss and a relative intensity; FIG. 8 shows a relationship between a K/Al molar ratio and a specific volume resistance; FIG. 9 shows a relationship between a specific volume resistance and spreadability; FIG. 10 shows a relationship between an F/Al molar ratio and spreadability; and FIG. 11 shows a relationship between an F/Al molar ratio and a specific volume resistance. Note that, in FIG. 4 through FIG. 11, rhombic marks represent results of flux powders of No. 1 through No. 11, square marks represent results of flux powders of No. 12 through No. 24, and triangular marks represent results of flux powders No. 25 through No. 32.

As apparent from FIG. 4, those among the results of the flux powders of No. 25 through No. 32 represented by triangles, which were outside a reaction temperature of 70 to 100°C upon production, exhibited spreadabilities less than 15 mm, respectively, thereby clarifying that lower reaction temperatures lead to inferior spreadabilities of flux powders. As apparent from FIG. 5, the relationship between a K/Al molar ratio and an F/Al molar ratio showed a tendency that lower K/Al molar ratios lead to lower F/Al molar ratios. As apparent from FIG. 6, concerning the relationship between a K/Al molar ratio and spreadability, there was exhibited an improved spreadability by those results of flux powders of No. 12 through No. 24 represented by squares where K/Al molar ratios were within a range of 1.00 to 1.20, and there was exhibited a deteriorated spreadability by flux powders having K/Al molar ratios exceeding 1.20 with increase of fractions of K in molar ratios. As apparent from FIG. 7, the relationship between a heating loss and a relative intensity exhibited a tendency that smaller heating losses lead to lower relative intensities, and larger heating losses lead to higher relative intensities. It is recognized from FIG. 7 that values of heating losses indicate as to whether or not $K_2AlF_5 \cdot H_2O$ in each powder has sufficiently established a stoichiometric composition and sufficiently grown in crystallinity. As apparent from FIG. 8, concerning the relationship between a K/Al molar ratio and a specific volume resistance, specific volume resistances were within a range of $1 \times 10^9$ to $5 \times 10^{11}$ $\Omega \cdot cm$ for those results of flux powders of No. 12 through No. 24 represented by squares where K/Al molar ratios were within a range of 1.00 to 1.20, and there were exhibited higher resistance values by flux powders having K/Al molar ratios near 1.20 and exceeding this value.

As apparent from FIG. 9, concerning the relationship between a specific volume resistance and spreadability, there was exhibited an improved spreadability by those results of flux powders of No. 12 through No. 24 represented by squares where specific volume resistances were within a range of $1 \times 10^9$ to $5 \times 10^{11}$ $\Omega \cdot cm$. Meanwhile, there were caused variances of spreadability, in the results of flux powders of No. 1 through No. 11 represented by rhombuses and flux powders of No. 25 through No. 32 represented by triangles in the figure and all exhibiting higher resistance values. As apparent from FIG. 10, concerning the relationship between an F/Al molar ratio and spreadability, there was exhibited an improved spreadability by those results of flux powders of No. 12 through No. 24 represented by squares where F/Al molar ratios were within a range of 3.80 to 4.10, and there was exhibited a deteriorated spreadability by flux powders having F/Al molar ratios near 1.20 and exceeding this value with increase of fractions of F in molar ratios. As apparent from FIG. 11, concerning the relationship between an F/Al molar ratio and a specific volume resistance, specific volume resistances were within a range of $1 \times 10^9$ to $5 \times 10^{11}$ $\Omega \cdot cm$ by those results of flux powders of No. 12 through No. 24 represented by squares where F/Al molar ratios were within a range of 3.80 to 4.10, and there were exhibited higher resistance values by flux powders having F/Al molar ratios near 4.10 and exceeding this value.

INDUSTRIAL APPLICABILITY

The flux powder of the present invention is not restricted to brazing of an aluminum-based material having an Mg content of 0.1 to 1.0 wt%, and is also applicable to brazing of an aluminum-based material having an Mg content less than 0.1 wt%, and an aluminum-based material without containing Mg.

**Claims**

1. A flux powder containing therein $KAlF_4$, $K_2AlF_5$, and $K_2AlF_5 \cdot H_2O$, usable for brazing of an aluminum-based material having a magnesium content of 0.1 to 1.0 wt%, **characterized in that** the flux powder has a composition where a K/A1 molar ratio is within a range of 1.00 to 1.20 and an F/Al molar ratio is within a range of 3.80 to 4.10, and the $K_2AlF_5$ and $K_2AlF_5 \cdot H_2O$ have a sum content of 6.0 to 40.0 wt%, balance $KAlF_4$, and
that part or the whole of the crystal structure of $K_2AlF_5 \cdot H_2O$ is at least one of a K-defective type, F-defective type, and K-and-F-defective type crystal structure.

2. A flux powder containing therein $KAlF_4$, $K_2AlF_5$, $K_2AlF_5 \cdot H_2O$, and $K_3AlF_6$, usable for brazing of an aluminum-based material having a magnesium content of 0.1 to 1.0 wt%, **characterized in that** the flux powder has a composition where a K/Al molar ratio is within a range of 1.00 to 1.20 and an F/Al molar ratio is within a range of 3.80 to 4.10, and the $K_2AlF_5$ and $K_2AlF_5 \cdot H_2O$ have a sum content of 6.0 to 40.0 wt%, and the $K_3AlF_6$ has a content of 5.0 wt% or less, balance $KAlF_4$, and
that part or the whole of the crystal structure of $K_2AlF_5 \cdot H_2O$ is at least one of a K-defective type, F-defective type, and K-and-F-defective type crystal structure.

3. The flux powder of claim 1 or 2, wherein the flux powder has a specific volume resistance in a range of $1 \times 10^9$ to $5 \times 10^{11}$ $\Omega \cdot cm$ when the flux powder has been dried down to a constant weight at 100°C.

4. The flux powder of claim 1 or 2, wherein the maximum diffraction peak intensity which is present at $2\theta$ between 44° and 45° and which is derived from $K_2AlF_5 \cdot H_2O$ upon X-ray diffraction analysis of the flux powder, is 12% or less of the maximum peak intensity derived from $KAlF_4$.

5. The flux powder of claim 1 or 2, wherein the melting peak height of the flux powder detected in a temperature range of 550 to 560°C upon differential thermal analysis of the flux powder, is higher than the melting peak height detected in a temperature range higher than 560°C.

6. A production method of a flux powder usable for brazing of an aluminum-based material having a magnesium content of 0.1 to 1.0 wt%, **characterized in that** the method comprises the steps of:

adopting aluminum hydroxide, hydrofluoric acid, and potassium hydroxide, as starting compounds;
using the starting compounds at a K/Al molar ratio within a range of 1.00 to 1.20 and an F/Al molar ratio within a range of 4.00 to 4.20; and
wet reacting the starting compounds with one another at a reaction temperature of 70 to 100°C.

Fig. 1

$Al(OH)_3$          HF

(a)     | $HAlF_4$ |

                KOH

(b)     HF   | $KAlF_4$ |   KOH

(c)     | Reaction product |

(d)     | Filtering and washing |

(e)     | Drying |

(f)     | Controlling of particle size distribution and particle shape |

Fig. 2

Fig. 3

Fig. 4

Fig. 5

Fig. 6

Fig. 7

Fig. 8

Fig. 9

Fig. 10

Fig. 11

## INTERNATIONAL SEARCH REPORT

| | International application No. |
|---|---|
| | PCT/JP2006/305817 |

**A. CLASSIFICATION OF SUBJECT MATTER**
*B23K35/363*(2006.01), *B23K35/40*(2006.01)

According to International Patent Classification (IPC) or to both national classification and IPC

**B. FIELDS SEARCHED**

Minimum documentation searched (classification system followed by classification symbols)
*B23K35/363*(2006.01), *B23K35/40*(2006.01)

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 5-185286 A  (Furukawa Aluminum Co., Ltd.),<br>27 July, 1993 (27.07.93),<br>Claims<br>(Family: none) | 1-6 |
| A | JP 1-60360 B2  (Morita Kagaku Kogyo Kabushiki Kaisha),<br>22 December, 1989 (22.12.89),<br>Claims; page 2, column 4, lines 18 to 24;<br>Table 1<br>& US 4579605 A | 1-6 |
| P,A | WO 2005/030434 A1  (Jemco Inc.),<br>07 April, 2005 (07.04.05),<br>Claims; Figs. 2, 3<br>& JP 2005-125406 A | 1-6 |

☒ Further documents are listed in the continuation of Box C.　　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>05 June, 2006 (05.06.06) | Date of mailing of the international search report<br>13 June, 2006 (13.06.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/305817

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-211598 A (Morita Kagaku Kogyo Kabushiki Kaisha),<br>11 August, 1998 (11.08.98),<br>Claims; page 3, column 3, line 46 to page 4, column 6, line 9; Table 1; Figs. 3, 5<br>& US 6010578 A | 1-6 |
| A | JP 8-71788 A (Morita Kagaku Kogyo Kabushiki Kaisha),<br>19 March, 1996 (19.03.96),<br>Claims; page 3, column 3, line 41 to page 4, column 6, line 29<br>(Family: none) | 1-6 |
| A | JP 4-48556 B2 (Furukawa Aluminum Co., Ltd.),<br>07 August, 1992 (07.08.92),<br>Claims<br>(Family: none) | 1-6 |
| A | JP 10-130018 A (Solvay Fluor und Derivate GmbH),<br>19 May, 1998 (19.05.98),<br>Claims<br>& US 5985233 A        & EP 0837035 A1<br>& DE 19643026 A1 | 1-6 |
| A | JP 8-337418 A (Solvay Fluor und Derivate GmbH),<br>24 December, 1996 (24.12.96),<br>Claims; page 3, column 3, line 50 to column 4, line 32<br>& US 5968288 A        & EP 0747164 A1<br>& DE 19520812 A1 | 1-6 |
| A | JP 8-224690 A (Solvay Fluor und Derivate GmbH),<br>03 September, 1996 (03.09.96),<br>Claims<br>& US 5980650 A        & EP 0723835 A1<br>& DE 19519515 A1 | 1-6 |
| A | JP 4-361895 A (Tohkem Products Corp.),<br>15 December, 1992 (15.12.92),<br>Claims; page 3, column 3, lines 17 to 36<br>(Family: none) | 1-6 |
| P,A | JP 2005-95950 A (Mitsubishi Materials Corp.),<br>14 April, 2005 (14.04.05),<br>Claims<br>(Family: none) | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S601985184490 B

- JP S611986162295 B